Europäisches Patentamt

European Patent Office

Office européen des brevets

(19)

(11) Publication number: **0 127 967**

**A1**

(12) # EUROPEAN PATENT APPLICATION

(21) Application number: **84303200.4**

(22) Date of filing: **11.05.84**

(51) Int. Cl.³: **H 04 L 11/16**
**H 04 N 5/24**

(30) Priority: **20.05.83 GB 8314045**

(43) Date of publication of application:
**12.12.84 Bulletin 84/50**

(84) Designated Contracting States:
**AT DE FR GB NL**

(71) Applicant: **SONY CORPORATION**
**7-35 Kitashinagawa 6-Chome Shinagawa-ku**
**Tokyo 141(JP)**

(72) Inventor: **Adair, Paul Matthew**
**121 Borodin Close**
**Basingstoke Hampshire(GB)**

(74) Representative: **Thomas, Christopher Hugo et al,**
**D Young & Co 10 Staple Inn**
**London WC1V 7RD(GB)**

(54) **Remote control systems.**

(57) A remote control system comprises a plurality of network stations (10) each comprising at least one network interface (32), a common bus (1) to which the network stations (32) are connected, and a plurality of devices, such as video tape recorders (33, etc), to be controlled and a plurality of control devices, such as remote control panels (39, etc), for issuing controls to the devices to be controlled, each of the devices to be controlled and each of the control devices being connected to a network interface (32). Each network interface (32) comprises switches (59, 60) for setting a numerical network interface address which identifies that network interface (32), a store (63) for storing the network interface address of the network interface (32) having the next higher network interface address, and a processor (57) operative on start-up of the system to determine the next higher network interface address and store it in the store (63), and operative on receiving a token from the network interface (32) with the next lower interface address to transmit a message to the bus (1) and then to pass the token to the network interface (32) with the next higher network interface address.

EP 0 127 967 A1

FIG. 3.

1

## REMOTE CONTROL SYSTEMS

This invention relates to remote control systems, and more particularly, but not exclusively, to remote control systems for use in a television broadcast studio complex or a television post-production facility for the remote control of a variety of devices such as video tape recorders (VTRs) and video tape editors.

A previously proposed form of remote control system is a so-called token passing network system in which each of a plurality of devices to be remote controlled is connected to a common network by way of a network interface. Any given device is only able to pass control signals or data to the network when its network interface is in possession of a token which circulates around the system from one network interface to the next in some predetermined way.

Such a token passing network system has many advantages. For example, it is adaptable to small and large systems, and it is readily possible to add new devices to an existing system. Because the system is basically modular, both small and large systems can be built up using the same basic elements, and where the control signals pass over cables, only a relatively simple cable installation is required. The computing power of such a system is distributed around the system, and this increases the resistance of the system to component failure. Finally, such a system can readily be integrated with general purpose computer networks, and can be made fully compatible with the standards for remote control now being evolved by the European Broadcasting Union (EBU) and the US Society of Motion Picture and Television Engineers (SMPTE).

There are, however, problems with existing token passing network systems. In particular, because the token circulates around the network interfaces in a predetermined way, the token may cease circulating if it is passed to a faulty network interface, or if a network interface is trying to pass the token to a network interface which is faulty and which will not accept it.

According to the present invention there is provided a remote control system comprising:

a plurality of network stations, each said network station comprising at least one network interface;

a common bus to which said network stations are connected; and

a plurality of devices to be remotely controlled and a plurality of control devices for issuing controls to said devices to be controlled, each of said devices to be controlled and each of said control devices being connected to a network interface;

characterised in that each network interface comprises:

switch means for setting a numerical network interface address which identifies that network interface;

a store for storing the network interface address of the network interface having the next higher network interface address;

means operative on start-up of the system to determine said next higher network interface address and to store it in said store; and

means operative on receiving a token from the network interface with the next lower network interface address to transmit a message to said bus and then to pass said token to the network interface with the next higher network interface address.

The invention will now be described by way of example with reference to the accompanying drawings, throughout which like parts are referred to by like references, and in which:

Figure 1 shows in block diagrammatic form part of an embodiment of remote control system according to the invention;

Figure 2 shows in more detailed block diagrammatic form part of the embodiment of Figure 1; and

Figure 3 shows in still more detailed block diagrammatic form part of the embodiment of Figure 1.

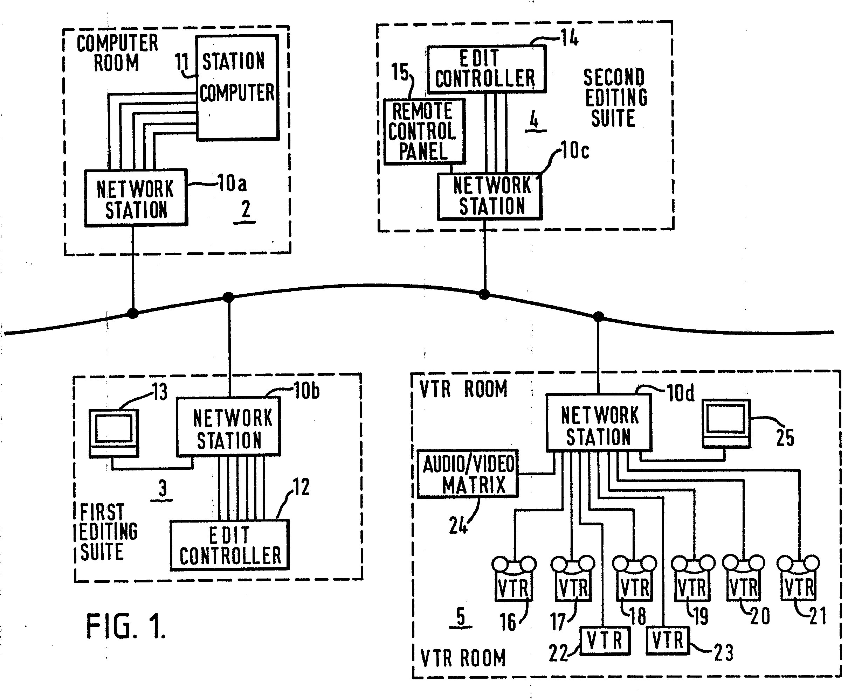

Referring first to Figure 1, the embodiment of remote control system to be described is for use in a television broadcast studio complex or a television post-production facility. The system comprises a plurality of facilities each connected to a local area network or bus formed by a cable 1. Four of the facilities are shown, these being a computer room 2, a first editing suite 3, a second editing suite 4, and a VTR room 5.

The computer room 2 has a station computer 11 which is connected to the cable 1 by way of a network station 10a. The first editing suite 3 has an edit controller 12 and an assignment unit 13 which are connected to the cable 1 by way of a network station 10b. The second editing suite 4 has an edit controller 14 and a remote control panel 15 which are connected to the cable 1 by way of a network station 10c. The VTR room 5 has VTRs 16 to 23, an audio/video matrix 24 and an assignment unit 25 connected to the cable 1 by way of network station 10d.

The control signals which are used for the remote control and interconnection of the various devices at the various facilities are generated by the assignment units 13 and 25 and the remote control panel 15. The assignment units 13 and 25 can take a variety of different forms ranging from a simple switch panel to a video display unit with sophisticated graphics presentation capabilities to provide a means by which users enter equipment connections or assignment information. The number and the position of the remote control panels and the assignment units is of course suited to the particular requirements of the system.

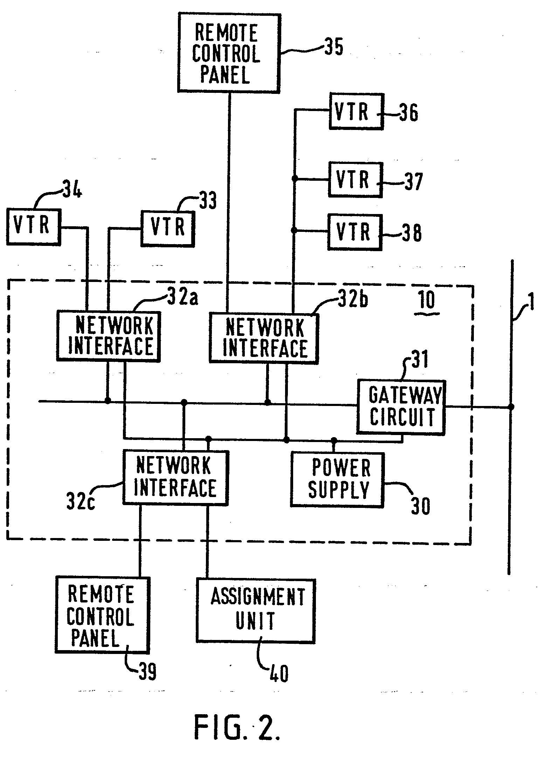

Figure 2, to which reference is now also made, shows part of the system, and in particular a typical network station 10 in more detail. Each network station 10 comprises a power supply 30, a gateway circuit 31 and a plurality of network interfaces 32 (32a, 32b and 32c in the case of the network station 10 shown). The number of network interfaces 32 is not limited to any particular number and there may for example be up to twelve or even more in each network station 10. The power supply 30, the gateway circuit 31 and each network interface 32 are mounted on a respective single printed circuit board, in particular because this modular construction facilitates extension of the system when required.

Each of the devices to be controlled, and the means for generating the control signals for the devices are connectable by way of a network interface 32 to the gateway circuit 31 and thence to the cable 1. In the example shown in Figure 2, the VTRs 33 and 34 are connected to the network interface 32a, a remote control panel 35 and VTRs 36, 37 and 38 are connected to the network interface 32b, and the remote control panel 39 and an assignment unit 40 are connected to the network interface 32c.

Basically the system operates as a token passing network system and a given device is only able to pass control signals or data to the cable 1 when its network interface 32 is in possession of a token which circulates around the system. This ensures that access to the network is both orderly and free from clashes by stipulating that a network interface 32 is only able to transmit onto the cable 1 when it is in possession of the unique, circulating token. This means that the network control is completely distributed and each network interface 32 is guaranteed a response time which will not exceed a given maximum. Moreover, the hardware requirements for the network interfaces 32 are relatively simple and the software overheads are kept at a reasonable level. Also, as will be described below, automatic re-configuration of the network occurs in order to by-pass faulty network interfaces 32. Finally, the system can readily be incorporated into existing data communications systems.

Each network interface 32 comprises a memory which stores the following five data elements associated with the operation of the token passing:

1.    NIA - Network Interface Address
Range 0 to 255
Each network interface 32 is allocated a network interface address which is used uniquely to identify it from other network interfaces 32 in the system. A network interface address is preset using two hexadecimal switches mounted on the network interface 32, and the network interface address does not need to be changed after the initial system installation.

2.    SIA - Successor (Network) Interface Address
Modulo 255.
This is a local variable maintained by each network interface 32 and is a pointer to the operational network interface 32 with the next higher network interface address. This successor interface address is used by a network interface 32 to determine the next recipient network interface 32 in the token passing sequence.

3.    PSIA - Proposed Successor Interface Address
Modulo 255
This is a local variable maintained by each network interface 32 and is a pointer to the operational network interface 32 with the next-but-one higher network interface address. It is used in the token passing sequence when failure of the network interface 32 denoted by the successor interface address is detected.

4.    CHANCE

Range 0 to 3

This is a local variable maintained by each network interface 32 and is used in the token passing sequence to give a suspect network interface 32 denoted by the successor interface address three chances of recovery before being by-passed in the token passing sequence.

5.    STARTUP

Logical variable (values: true/false)

This is a local variable maintained by each network interface 32 and takes the values "true" on power-up or following a network restart, and is subsequently reset to "false" once the token passing sequence has been established.

The algorithm which an network interface 32 executes in a token passing sequence can be broken down into the following steps:

Step 1        On power up or during a network restart, all network interfaces 32 initialise their local SIA variable to SIA:=NAI + 1 STARTUP:=true.

Step 2        "Listen" for bus activity.
              If activity is detected go immediately to step 3.
              If no activity is detected within the period Ta * NIA, then goto step 4.

Step 3        Wait for a transmit token. If a network interface 32 has data to send, then transmission of one message is now allowed.
              If STARTUP=false, then goto step 5.

Step 4Transmit token on to SIA. "Listen" for bus activity on the cable 1 for period Tb. To cover the possibility of temporary failure this is, if necessary, repeated three times before accepting failure and incrementing SIA.
              If activity is detected then STARTUP:=false, CHANCE:=3, then goto step 3
              else increment SIA and repeat step 4.

Step 5      Transmit token on to SIA. "Listen" for bus activity on the cable 1 for period Tb. This is also repeated three times to cover the possibility of temporary failure.

If activity is detected then CHANCE:=3, goto step 3.

CHANCE:=CHANCE - 1.

If CHANCE=2, goto step 8.

If CHANCE=1, goto step 7.

(If CHANCE=0, goto step 6).

Step 6      SIA:=PSIA CHANCE:=3 goto step 5.

Step 7      Transmit token on to PSIA. "Listen" for bus activity on the cable 1 for period Tb. This also is repeated three times to cover the possibility of temporary failure.

If activity is detected then goto step 3.

If no activity is detected then instigate Network restart.

Step 8      PSIA:=SIA + 1

Step 8a      Transmit token on to PSIA. "Listen" for bus activity on the cable 1 for period Tb. This also is repeated three times to cover the possibility of temporary failure.

If activity is detected then goto step 3.

else increment PSIA and repeat step 8a.

Commenting on the above algorithm:

In step 1 the network interface 32 will assume that the SIA is one higher than the NIA. In other words, the network interface 32 will first try to pass the token to the network interface 32 with the next higher address.

In step 2 the network interface 32 will listen for bus activity for the period Ta, which may for example be 1 millisecond, times its NIA. This is to ensure that on startup the network interface 32 with the lowest NIA will receive the token first, and so on through the sequence of NIAs. If no bus activity is detected during this period, then the network interface 32 goes to step 4, because that network interface 32 must be the one to transmit the token. However, if there is bus activity, then this means that a network interface 32 with a lower NIA has taken the initiative, in which case it is necessary to go to step 3 and wait for a transmit token. This is the way in which a token is initially created.

If, having transmitted the token in step 4, bus activity is detected during the period Tb in step 5, then the network interface 32 goes back to step 3 because this indicates that the network interface 32 having the SIA has accepted the token. If there is no bus activity, then the SIA is incremented and step 4 is repeated. Thus by repeated incrementing of the SIA until acceptance of the token, step 4 is operative to set the correct SIA into each interface network 32 on startup.

Subsequent to this startup procedure, the network interface 32 will pass directly from step 3 to step 5. Step 5 deals with normal transmission of the token to the network interface 32 with the SIA, but also with the situation where this network interface 32 does not accept the token. As the network interface 32 with the SIA previously accepted the token, failure to accept it will generally indicate some temporary fault, and the network interface 32 with the SIA is therefore given three chances to recover. In parallel with this a PSIA is prepared by incrementing the SIA by one, so that if the failure of the network interface 32 with the SIA continues after the three chances it is given to accept the token, then that network interface 32 will be by-passed and the token will be passed to the network interface 32 having the next-but-one higher address and that address will be set as the new SIA.

Steps 8 and 8a deal with the incrementing of the PSIA until a network interface 32 is found which will accept the token. This sets the value of the PSIA.

The next time the network interface 32 comes to the step 5 it will initially try to transmit the token to the SIA, and if this fails it will go to step 7 and transmit the token to the PSIA. When no activity is then detected a network restart is instigated.

On coming to step 5 again, when CHANCE=0, it will be assumed that the network interface 32 with the SIA is permanently faulty, so the network interface 32 will go to step 6 and substitute the PSIA for the SIA.

In the event of multiple message collisions on the cable 1 being detected, or if a network interface 32 fails to receive a token within the guaranteed service period Tc, one or more network interfaces 32 will initiate a global network re-start. All the network interfaces 32 in the system must recognise and synchronise themselves to the trailing edge of the re-start signal. Then, after electrically isolating themselves from the network, the network interfaces 32 execute a self-check sequence on all components whose failure could result in performance degradation or total failure of the network. If a self-check routine does reveal the failure of a critical element, the network interface 32 will remain permanently isolated from the cable 1 resulting in the loss of the service which it previously provided. On the other hand, if the health of a network interface 32 is satisfactory, re-connection to the cable 1 by way of the gateway circuit 32 is permitted and operation re-commences from step 1 of the token passing sequence. Such a re-start concerns only the physical and data link layers of a network interface 32 and therefore does not corrupt existing equipment assignments.

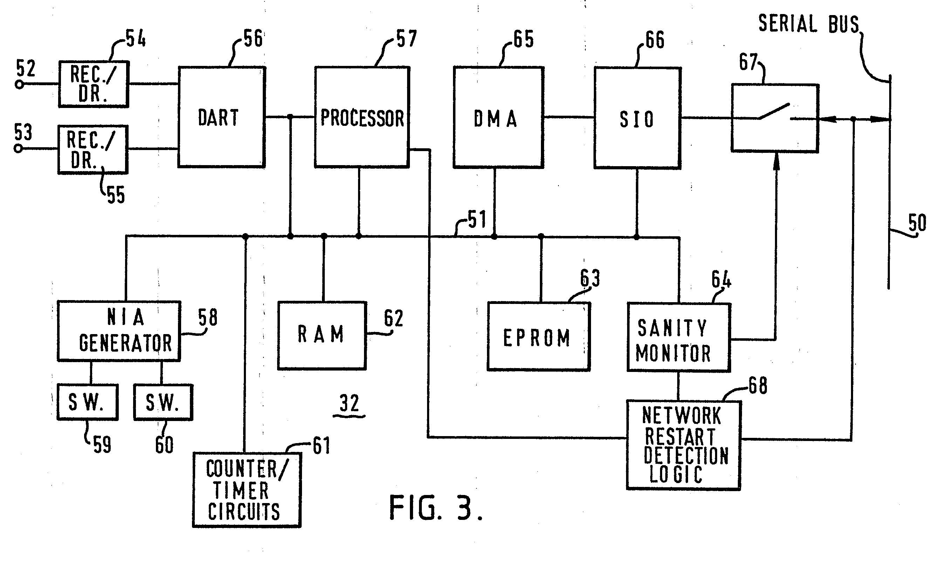

A network interface 32 will now be described in more detail with reference to Figure 3. The network interface 32 is connected to a serial bus 50 which extends from the gateway circuit 31 (Figure 2), and includes an internal bus 51 to which many of the components of the network interface 32 are connected.

This particular network interface 32 is assumed to have two input/output ports 52 and 53 for connection to devices, such as VTRs, which are to be controlled, or to and from which information is to be fed. The ports 52 and 53 are connected by way of respective receiver drivers 54 and 55 to a dual asynchronous receiver/transmitter (DART) 56 which effects the necessary series to parallel conversion. The DART 56 is connected to the bus 51 and to a processor 57, which may for example be a Z80.

Also connected to the bus 51 by way of an NIA generator circuit 58, are two hexadecimal switches 59 and 60, by which the NIA of the particular network interface 32 is set.

Also connected to the bus 51 are counter/timer circuits 61 which may also be formed by a Z80, a random access memory (RAM) 62 and an erasable programmable read only memory (EPROM) 63, a sanity monitor 64, a direct memory access (DMA) 65 and a serial input/output (SIO) 66. The SIO 66 is connected to the serial bus 50 by way of a relay 67 which is controlled by the sanity monitor 64. The network interface 32 also includes network restart detection logic 68 which is connected directly to the serial bus 50 and also to a non-maskable interrupt terminal of the processor 57. The counter/timer circuits 61 are used to generate a real time clock and also the time-out periods in the algorithm referred to above. Direct connections extend between the processor 57 and the DART 56, and also between the SIO 66 and the DMA 65.

Basically, the operation of the network interface 32 is controlled by the processor 57 on an interrupt drive basis, so that as soon as information arrives from or for a particular device, the processor 57 will be diverted to deal with it.

The serial bus 50 has a data rate of 800 kilobits/second and is managed by the SIO 66 which implements the message format, which is the international standard known as the high-level data link control (HLDC) structure. In HLDC all transmissions are in frames, and each frame conforms to the following format:

| | |
|---|---|
| Flag | 01111110 |
| Address | 8 bits designating the NIA |
| Control | 8 bits specifying the type of information which is to follow |
| Information | this is an unspecified number of bits |
| Frame check sequence | 16 bits which form a check for the address information |
| Flag | 01111110 |

The DMA 65 forms a buffer between the SIO 66 and the processor 57, because of the high-data rate on the serial bus 50, but in some systems the DMA 65 will not be necessary.

The processor 57 communicates a special code to the sanity monitor 64 at regular intervals of for example 1 millisecond. In the absence of this code, the sanity monitor 64 will open the relay 67, to prevent the network interface 32 receiving messages from or transmitting spurious signals onto the serial bus 50. Additionally, the sanity monitor 64 will hold the network interface 32 isolated from the serial bus 50 for a short interval on network restart, while the internal checks are performed in the network interface 32. At this time, which is detected by the network restart detection logic 68, which it will be noted is connected directly to the serial bus 50, that is on the output side of the relay 67, a signal will be supplied to the sanity monitor 64 and to the non-maskable interrupt terminal of the processor 57. During this interval dummy frames will be passed from the processor 57 to the SIO 66 as part of the internal checks. If the checks are completed satisfactorily, the sanity monitor 64 causes the relay 67 to close and the network interface 32 is then ready for operation.

When an incoming frame is recognised as having the NIA appropriate to that network interface 32, then the data in that frame is stored for examination by the processor 57. If the data is found to comprise a token, then the processor 57 will initiate the algorithm described above. If on the other hand the data relates to control or information for a device connected to one of the ports 52 or 53, then it will be routed to that device.

In the HLDC frame structure, the eight control bits which designate the type of information which is in the frame may indicate an information frame, a supervisory frame or an un-numbered frame. Information frames are used to send and acknowledge device control messages, to set up linkage information at assignment time, and to transfer network diagnostic commands and responses. Supervisory frames are used, for example, to request re-transmission of specified information frames, and to perform other data link control functions such as regulating message flow. In other words, these are essentially system management frames. The un-numbered frames are used solely for token passing.

The information bits in the frame are used solely in conjunction with the information transfer control and comprise the data appropriate to the type of frame being transmitted, for example a device control message or linkage information.

It will be appreciated that the network interface 32 described above can be built up entirely from standard components, and in particular does not require the provision of special high-speed components.

Various modifications are of course possible. For example, the network restart detection logic 68 in the network interface 32 of Figure 3 may have provision for initiating a network restart itself. This is to deal with the situation where a new network interface 32 is added to a system which is already in operation. In this situation, the added network interface 32 will normally not receive a token, and will not therefore be accepted into the operation of the system. In this case, the network restart detection logic 68 operates such that if, after a given interval, it fails to recognise the receipt of the token, it will itself initiate a network restart and, as will be seen from the algorithm above, this will have the effect of setting the NIA of the newly-added network interface 32 as the SIA in the network interface 32 having the next lower NIA.

CLAIMS

1.      A remote control system comprising:

a plurality of network stations (10), each said network station (10) comprising at least one network interface (32);

a common bus (1) to which said network stations (10) are connected; and

a plurality of devices (33, etc) to be remotely controlled and a plurality of control devices (39, etc) for issuing controls to said devices (33, etc) to be controlled, each of said devices (33, etc) to be controlled and each of said control devices (39, etc) being connected to a network interface (32);

characterised in that each network interface (32) comprises:

switch means (59, 60) for setting a numerical network interface address which identifies that network interface (32);

a store (63) for storing the network interface address of the network interface (32) having the next higher network interface address;

means (57) operative on start-up of the system to determine said next higher network interface address and to store it in said store (63); and

means (57) operative on receiving a token from the network interface (32) with the next lower network interface address to transmit a message to said bus (1) and then to pass said token to the network interface (32) with the next higher network interface address.

2.      A system according to claim 1 wherein each network interface (32) further comprises means (57) operative on failure of the network interface (32) with the next higher network interface address to accept said token to determine the next-but-one higher network interface address and store it in said store (63).

3.      A system according to claim 2 wherein each said network interface (32) comprises means (57) operative on repeated failure of said network interface (32) having the next higher network interface address to accept said token, to substitute said next-but-one higher network interface address for said next higher network interface address in said store (63).

4.      A system according to claim 3 wherein each network interface (32) further comprises means (57, 68) to initiate a network restart if the network

0127967

interface (32) having said substituted network interface address fails to accept said token.

5.    A system according to claim 1 wherein each network interface (32) further comprises means (57, 68) to initiate a network restart when said network interface (32) fails to receive said token during a predetermined interval.

6.    A system according to claim 1 wherein at least some of said network interfaces (32) have a plurality of said devices (33, etc) to be controlled and/or said control devices (39, etc) connected thereto.

7.    A system according to claim 1 wherein said devices (33, etc) to be controlled comprise video tape recorders (16 to 21) and video tape recorder edit controllers (12, 14).

8.    A system according to claim 1 wherein said control devices (38, etc) comprise remote control panels (15) and assignment units having video displays (13).

FIG. 1.

0127967

FIG. 2.

FIG. 3.

3/3

## DOCUMENTS CONSIDERED TO BE RELEVANT

| Category | Citation of document with indication where appropriate, of relevant passages | Relevant to claim | CLASSIFICATION OF THE APPLICATION (Int. Cl. ³) |
|---|---|---|---|
| X | IEEE ELECTRO, vol. 8, 19th-21st April 1983, pages 10/4, 1-7, New York, US; M. STIEGLITZ: "LSI implements efficient token protocol" <br> * Page 5, left-hand column, line 1 - page 6, right-hand column, line 30; page 7, left-hand column, lines 42-53 * | 1-5 | H 04 L 11/16 <br> H 04 N 5/24 |
| | --- | | |
| X | IEEE ELECTRO, vol. 8, 19th-21st April 1983, pages 10/1, 1-7, New York, US; B. CAYTON: "VLSI circuit provides complete controller for token-pass systems" <br> * Page 4, left-hand column, line 10 - page 5, left-hand column, line 3; figure 2 * | 1,2,5 | |
| A | IDEM | 4 | **TECHNICAL FIELDS SEARCHED (Int. Cl. ³)** |
| | --- | | H 04 L <br> H 04 N |
| X | EP-A-0 060 067 (GOULD) <br> * Abstract; page 5, line 1 - page 8, line 34; page 41, lines 11-33; page 50, line 1 - page 51, line 27 * | 1-5 | G 06 F <br> G 11 B |
| | --- -/- | | |

The present search report has been drawn up for all claims

| Place of search THE HAGUE | Date of completion of the search 28-08-1984 | Examiner MIKKELSEN C. |
|---|---|---|

## EUROPEAN SEARCH REPORT

| | DOCUMENTS CONSIDERED TO BE RELEVANT | | Page 2 |
|---|---|---|---|
| **Category** | Citation of document with indication, where appropriate, of relevant passages | **Relevant to claim** | **CLASSIFICATION OF THE APPLICATION (Int. Cl. ³)** |
| A | LOCAL NETWORKS - STRATEGY & SYSTEMS, PROCEEDINGS OF LOCALNET '83, March 1983, pages 261-275, London, GB; LIANG LI et al.: "Performance characteristics of token bus networks" * Part II; figure 1 * --- | 1,6,8 | |
| A | HASLER-MITTEILUNGEN, vol. 40, no. 1, 1981, pages 37-40, Bern, CH; M. SCHMID: "SILK im Fernwirksystem des Zweiten Deutschen Fernsehens (ZDF)" * Whole document * ----- | 1,6-8 | |
| | | | **TECHNICAL FIELDS SEARCHED (Int. Cl. ³)** |
| | The present search report has been drawn up for all claims | | |

| Place of search | Date of completion of the search | Examiner |
|---|---|---|
| THE HAGUE | 28-08-1984 | MIKKELSEN C. |